(19) Europäisches Patentamt
European Patent Office
Office européen des brevets

(11) **EP 2 342 117 B1**

(12) **EUROPÄISCHE PATENTSCHRIFT**

(45) Veröffentlichungstag und Bekanntmachung des Hinweises auf die Patenterteilung:
**26.12.2018 Patentblatt 2018/52**

(51) Int Cl.:
**B62D 7/00** *(2006.01)*　　**B60G 7/00** *(2006.01)*
**B62D 9/00** *(2006.01)*　　**B62D 17/00** *(2006.01)*

(21) Anmeldenummer: **09777421.0**

(22) Anmeldetag: **24.07.2009**

(86) Internationale Anmeldenummer:
**PCT/EP2009/005383**

(87) Internationale Veröffentlichungsnummer:
**WO 2010/034370 (01.04.2010 Gazette 2010/13)**

(54) **LENKVORRICHTUNG FÜR EIN KRAFTFAHRZEUG**

STEERING DEVICE FOR A MOTOR VEHICLE

DISPOSITIF DE DIRECTION POUR UN VÉHICULE À MOTEUR

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **23.09.2008 DE 102008048568**

(43) Veröffentlichungstag der Anmeldung:
**13.07.2011 Patentblatt 2011/28**

(73) Patentinhaber: **Audi AG**
**85045 Ingolstadt (DE)**

(72) Erfinder:
• **MÜLLER, Hugo**
**86701 Rohrenfels-Ballersdorf (DE)**
• **KOSSIRA, Christoph**
**85053 Ingolstadt (DE)**

• **MEITINGER, Karl-Heinz**
**81667 München (DE)**
• **MICHEL, Wilfried**
**93339 Riedenburg (DE)**
• **SCHMID, Wolfgang**
**85354 Freising (DE)**

(74) Vertreter: **Bauer, Dominik Michael et al**
**Audi AG**
**Patentabteilung**
**85045 Ingolstadt (DE)**

(56) Entgegenhaltungen:
**EP-A1- 2 212 129　　WO-A-90/06255**
**WO-A-92/09476　　WO-A-98/16418**
**DE-A1-102004 049 296　　DE-A1-102008 011 367**
**JP-A- 60 015 224**

**Beschreibung**

Die Erfindung betrifft eine Lenkvorrichtung für ein Fahrzeug nach dem Oberbegriff des Patentanspruches 1.

Herkömmliche Lenksysteme, insbesondere Lenksysteme an mehrspurigen Fahrzeugen, können nur in Verbindung mit einer Fahrzeugachse eingesetzt werden, deren Achskinematik lenkbar ist. So wird eine Drehbewegung des Lenkrades über eine Lenksäule in das Lenkgetriebe eingeleitet und als Linearbewegung an ein Schwenklager weitergegeben.

Eine Lenkvorrichtung für ein Fahrzeug weist zumindest ein Stellglied auf, das zumindest ein lenkbares Fahrzeugrad um einen Lenkwinkel schwenkt. Der Lenkwinkel wird mittels der Drehbewegung eines Lenkrades vorgegeben.

Im Regelfall ist dieser Verbund mit einem festen Übersetzungsverhältnis für den Links-/Rechtseinschlag der Räder ausgelegt. Analog ist eine Sturz- und/oder Spurkurve von der konstruktiv vorgegebenen Achskinematik der jeweiligen Radaufhängung bestimmt und somit nicht aktiv einstellbar.

Das oben erwähnte Schwenklager herkömmlicher Schwenksysteme ist aufgrund der drehbaren Lagerpunkte zur Karosse mit einer aufwendigen Achskonstruktion verbunden. Die Achskinematik ist außerdem nicht variabel, sondern konstruktiv festgelegt. Außerdem ist das Lenkgetriebe herkömmlicher Lenksysteme aufgrund der Lenkgeometrie fest zu den Achsen positioniert und bestimmt somit das Vorderwagenkonzept. Dies führt oft zu aufwendigen Komponentenauslegungen, wie etwa ein geteiltes Getriebe. Zusätzlich ist die Lenksäule herkömmlicher Lenksysteme beim Fahrzeug-Crash oft ein erhebliches Sicherheitsrisiko für die Insassen.

Aus der WO 98/16418 A ist eine gattungsgemäße Lenkvorrichtung für ein Kraftfahrzeug bekannt. Die Lenkvorrichtung weist ein radseitiges Drehteil und ein achsseitiges Drehteil auf. Im radseitigen Drehteil ist das Fahrzeugrad unmittelbar über eine Antriebswelle drehgelagert. Über einen Lenkwinkelgeber kann das Fahrzeugrad um einen vorgegebenen Lenkwinkel geschwenkt werden. Hierzu können die beiden Drehteile gegeneinander verdreht werden. Das Fahrzeugrad ist mittels einer Antriebswelle unmittelbar im radseitigen Drehteil drehgelagert. Aus der DE 10 2004 049 296 A1 ist eine Sturz/Spurverstellung des Fahrzeuges bekannt, um das dynamische Fahrverhalten des Fahrzeuges, etwa sein Kurvenverhalten, zu verbessern. Aus der WO 92/09476 A ist eine Vorrichtung zur Einstellung eines Wasserantriebes in unterschiedliche Winkelpositionen bekannt. Aus der JP 60 015224 A ist ein Fahrzeug mit Vorderradantrieb bekannt, bei dem die Lage des Fahrzeugrades einstellbar ist. Aus der WO 90/06255 A ist ein Boot-Anstriebssystem bekannt, das schwenkbar ist. Die Aufgabe der Erfindung besteht darin, eine konstruktiv einfache Lenkvorrichtung bereitzustellen, deren Bauraum reduziert ist. Aus der nachveröffentlichten DE 10 2008 011 367 A1 ist eine Radaufhängung für ein Fahrzeug bekannt, bei der ein Stellglied bereitgestellt ist, mit dem ein Spur- und/oder Sturzwinkel des Fahrzeugrads verstellbar ist.

Die Aufgabe ist durch die Merkmale des Patentanspruches 1 gelöst. Vorteilhafte Weiterbildungen der Erfindung sind in den abhängigen Ansprüchen offenbart.

Gemäß dem Patentanspruch 1 weist das Stellglied der Lenkvorrichtung ein radseitiges Drehteil und ein achsseitiges Drehteil auf, die um ihre Drehachsen zueinander verdrehbar sind. Dabei kann zur Einstellung des Lenkwinkels des Fahrzeugrades das radseitige Drehteil durch Verdrehen der beiden Drehteile zueinander um einen Schwenkwinkel gegenüber dem achsseitigen Drehteil ausgelenkt werden.

Erfindungsgemäß erfolgt also die Lenkfunktion ausschließlich durch Verdrehen der beiden zusammenwirkenden Drehteile des Stellglieds. Die Lenkfunktion kann bevorzugt gleichzeitig mit einer überlagerten Sturz- und/oder Spuroptimierung erfolgen. Hierzu wird das, dem radseitigen Drehteil zugeordnete Fahrzeugrad um einen Spur- und/oder Sturzwinkel verschwenkt, wie es später ausführlicher erläutert ist. Aufgrund des Wegfalles der Lenksäule ist erfindungsgemäß die Fahrerplatzgestaltung mit zusätzlichen Freiheitsgraden ermöglicht. Ebenso ergeben sich größere Freiheiten bei der Packageauslegung.

Im Unterschied zum Stand der Technik erfolgt daher eine Winkelverstellung des radseitigen Drehteils durch eine Drehbetätigung eines der Drehteile beziehungsweise der beiden Drehteile des Stellglieds, und nicht durch eine Linear-Hubbewegung eines hydraulischen Stellzylinders, der gegen das radseitige Lagerelement drückt. Die Winkelverstellung kann durch gegensinnige oder gleichsinnige Drehbetätigung beider Drehteile beziehungsweise auch durch Drehung eines der beiden Drehteile erfolgen, während das andere Drehteil nicht um seine Achse rotiert.

Erfindungsgemäß kann das radseitige Drehteil mit seiner Mittelachse nach Art einer Taumelbewegung um seine Drehachse bewegt werden. Hierzu kann die Drehachse des radseitigen Drehteils um einen Winkel gegenüber der Drehachse des achsseitigen Drehteils schräggestellt sein. Bei der Taumelbewegung des radseitigen Drehteiles können die beiden Drehteile über Steuerflächen in Anlage, vorzugsweise in Gleitkontakt und/oder in Wälzkontakt (Wälzlager), sein, die wiederum in einer Drehebene liegen. Die Drehebene ist dabei senkrecht zur Drehachse des radseitigen Drehteils ausgerichtet. Auf diese Weise kann sich das radseitige Drehteil mit zugehörigem radseitigen Fahrzeugrad in einer Taumelbewegung um seine Drehachse bewegen. Dabei ändert sich der Schwenkwinkel zwischen dem radseitigen Drehteil und dem achsseitigen Drehteil in Abhängigkeit von dem Drehwinkel des radseitigen Drehteils.

Bauraumtechnisch günstig ist das erfindungsgemäße Stellglied in einem Radträger einer Radaufhängung des Fahrzeuges integriert. Der Radträger weist ein radseitiges, das Fahrzeugrad drehbar lagerndes Tragelement und ein achsseitiges Tragelement auf, zwischen denen das erfindungsgemäße Stellglied geschaltet ist.

Die beiden Drehteile des Stellglieds sind erfindungsgemäß über Drehlager an den jeweiligen Tragelementen drehbar gelagert. Auf diese Weise kann eine Verdrehung der beiden Drehteile zueinander stattfinden, ohne dass ein Drehmoment auf die Tragelemente übertragen wird.

Bauraumtechnisch bevorzugt ist es, wenn die beiden Drehteile als Hohlzylinder ausgebildet sind. Der zylindrische Innenraum der Hohlzylinder kann daher als Bauraum für einen Stellantrieb, Gelenkwellen beziehungsweise Gleichlaufwellen verwendet werden. In Abhängigkeit vom vorhandenen Bauraum kann der Stellantrieb auch außerhalb der Drehteile vorgesehen und trieblich mit den Drehteilen verbunden sein. Alternativ zur hohlzylindrischen Ausbildung können die Drehteile auch aus Vollmaterial und/oder in beliebiger Form hergestellt sein.

Durch eine Drehung des radseitigen Drehteils gegenüber dem achsseitigen Drehteil kann somit der Schwenkwinkel zwischen den beiden Drehteilen eingestellt werden. Der maximal einstellbare Schwenkwinkel ist dabei aus geometrischen Gründen das Zweifache des zwischen den beiden Drehachsen eingeschlossenen Neigungswinkels.

Durch eine gleichzeitig oder zeitlich versetzt erfolgende Drehung des achsseitigen Drehteils gegenüber dem achsseitigen Tragelement kann die räumliche Ausrichtung der von den beiden Drehteilen gebildeten Winkelanordnung verändert werden.

Die Stellantriebe für die beiden Drehteile sind als Drehmotoren realisiert, die jeweils in kompakter Bauweise innerhalb der hohlzylindrischen Drehteile platzsparend angeordnet sein können. Alternativ kann der Stellantrieb, wie bereits erwähnt, auch außerhalb oder in Kombination sowohl außen- als auch innenseitig angeordnet sein.

Die Stellantriebe für die beiden Drehteile können in einer Steuerstrecke beziehungsweise einem Regelkreis mit Regeleinrichtung eingebunden sein. Die Regeleinrichtung steuert auf der Grundlage des, über das Lenkrad vorgegebenen Lenkwinkels das Stellglied, insbesondere dessen Stellantrieb, an. Zusätzlich kann die Regeleinrichtung auf der Grundlage eines einzustellenden Soll-Spurwinkels beziehungsweise Soll-Sturzwinkels die Drehwinkel der beiden Drehteile festlegen. Für einen geschlossenen Regelkreis können den beiden Drehteilen Winkelgeber zugeordnet sein, die einen Drehwinkel-Ist-Wert der beiden Drehteile erfasst und an die Regeleinrichtung rückführt. Die Erfindung ist bei sämtlichen Regelstrategien mit Bezug auf die Fahrdynamik, den Fahrkomfort, auf Sicherheitseinstellungen oder auf die Grundauslegung des Fahrzeugs anwendbar.

Die Ansteuerung der Stellantriebe erfolgt über das Lenkrad, wie es aus Steer-by-wire-Systemen bekannt ist. Hierzu wird eine Lenkbewegung des Fahrzeuginsassen mittels eines Handmomentstellers über eine geeignete Sensorik erfasst, von einem Steuergerät verarbeitet und über die oben erwähnte Regeleinrichtung zu den Motoren geleitet. Die Lenkung ist mit zahlreichen Parametern einstellbar, die Eingangsgrößen für die Steuereinrichtung sind, etwa variable Lenkcharakteristik, funktionsangepasste Spur-/Sturzkennung, kinematikunabhängige Achsrückstellmomente und dergleichen. Die erfindungsgemäße Lenkkinematik ist nicht an ein starres Lenktrapez gebunden.

Für eine in Fahrzeugquerrichtung kompakte Bauweise der Radaufhängung können die beiden Drehteile ineinander verschachtelt angeordnet sein. Bevorzugt kann eines der beiden Drehteile, etwa das radseitige Drehteil, als ein topfförmiges Hohlprofilteil ausgeführt sein, in dem das achsseitige Drehteil vorgesehen ist. Der Boden des topfförmigen Drehteils kann in diesem Fall als oben beschriebene Steuerfläche gestaltet sein, die mit der Steuerfläche des achsseitigen Drehteils in Anlage ist.

Zusätzlich kann auch zumindest eines der Tragelemente als topfförmiges Hohlprofilteil mit einer Umfangswand ausgeführt sein, die einen Montageraum begrenzt, in dem das erfindungsgemäße Stellglied angeordnet ist. Für eine stabile Drehlagerung können die Drehteile an der Umfangswand des topfförmigen Tragelements abgestützt sein. Bei der oben beschriebenen ineinander verschachtelten Drehteil-Anordnung kann dabei lediglich das radial äußere Drehteil an der Umfangswand des topfförmigen Tragelements abgestützt sein. Erfindungsgemäß ist zwischen dem radseitigen Tragelement und dem achsseitigen Tragelement ein zusätzliches Kupplungselement geschaltet, über das ein Drehmoment, etwa ein Bremsmoment, vom radseitigen Tragelement auf das achsseitige Tragelement, und damit zum Fahrzeugaufbau, übertragen werden kann. Dieser Ausgestaltung der Erfindung liegt die Problematik zugrunde, dass sowohl das radseitige Drehteil als auch das achsseitige Drehteil relativ zueinander sowie mit Bezug auf die Tragelemente verdrehbar sind. Im ungünstigen Fall kann daher beispielsweise ein Bremsmoment ausgehend vom radseitigen Tragelement - aufgrund des Drehfreiheitsgrades zwischen den Drehteilen - nicht exakt auf das achsseitige Tragelement beziehungsweise auf den Fahrzeugaufbau übertragen werden. Mit dem zusätzlichen Kupplungselement wird ein weiterer Kräfte- und Momentenpfad bereitgestellt, über den das Bremsmoment zuverlässig auf den Fahrzeugaufbau übertragen werden kann.

Das Kupplungselement ist vorzugsweise vollständig entkoppelt vom, zwischen den Tragelementen geschalteten Stellglied beziehungsweise den Drehteilen des Radträgers. Auf diese Weise wird weder das Kupplungselement noch das Stellglied vom jeweils anderen Bauteil funktionell beeinflusst.

Das Kupplungselement kann bevorzugt verdrehsteif beziehungsweise torsionssteif sein, um die Drehmomentübertragung zu gewährleisten. Außerdem kann das Kupplungselement ausreichend elastisch und/oder nachgiebig gestaltet sein, um eine Auslenkung des radseitigen Drehteils gegenüber dem achsseitigen Drehteil ausgleichen zu können.

In einer bevorzugten Ausführungsform ist das Kupplungselement als ein Metallbalg realisiert, der sowohl am radseitigen als auch am achsseitigen Tragelement etwa über Befestigungsschrauben montiert ist. In dem vom Metallbalg begrenzten Montageraum können die Drehteile Stellglieds verschmutzungssicher angeordnet sein. Die Drehteile können dabei über einen freien Radialabstand vom Metallbalg beabstandet sein.

Wie oben bereits erwähnt, können die beiden Drehteile als Hohlzylinder ausgebildet sein. Deren zylindrischer Innenraum kann als Bauraum für die Stellantriebe dienen. Alternativ kann durch den Innenraum der Drehteile auch eine Gelenkwelle zum Antrieb des Fahrzeugrades geführt werden.

Die Anordnung der Stellantriebe innerhalb der hohlzylindrischen Drehteile ist insbesondere bevorzugt, wenn das Fahrzeugrad geschleppt wird, also nicht durch eine Gelenkwelle angetrieben wird. In diesem Fall ist der Hohlraum der Drehteile leer. Es können daher ohne weiteres die Stellantriebe darin vorgesehen werden.

Bei Verwendung einer, durch den Hohlraum der Drehteile geführten Gelenkwelle kann es aufgrund des begrenzten Bauraums erforderlich sein, die Stellantriebe außerhalb der beiden hohlzylindrischen Drehteile anzuordnen. In diesem Fall kann an jedem der Drehteile außenumfangsseitig jeweils eine Getriebestufe, etwa eine Stirnradstufe oder dergleichen, vorgesehen sein. Die damit trieblich verbundenen Stellantriebe können bauraumgünstig außerhalb des Radträgers in dafür vorgesehenen Freiräumen integrierbar sein.

Eine solche Anordnung der Getriebestufen sowie der zugehörigen Stellantriebe außerhalb der Drehteile ist jedoch hinsichtlich der Verwendung eines Metallbalges als Kupplungselement problematisch. Die jeweilige Getriebestufe beziehungsweise der zugehörige Stellantrieb müsste nämlich durch den Metallbalg hindurch geführt werden, wodurch die Funktionsfähigkeit des Metallbalges reduziert wird. Wird nämlich eine solche Getriebedurchführung in den Metallbalg integriert, so sinkt das vom Metallbalg übertragbare Drehmoment aufgrund des Flächenträgheitsmomentes an dieser Stelle. Zum Ausgleich müsste der Durchmesser des Metallbalges stark erhöht werden.

Alternativ zum Metallbalg kann daher als Kupplungselement ein Kardangelenk eingesetzt werden, das zwischen das radseitige und das achsseitige Tragelement geschaltet ist. Für eine bauraumreduzierte Ausführung kann das Kardangelenk ein, bevorzugt radial außerhalb der Drehteile angeordnetes Gelenkteil, etwa ein Ringelement, aufweisen, das sich mit einem Radialabstand um die Drehteile erstreckt. Außerdem kann das Kardangelenk mit den Tragelementen verbundene Stege aufweisen, die nach Art einer Gelenkgabel wiederum über Drehachsen gelenkig am Ringelement angelenkt sind. Auf diese Weise erfolgt mittels des Kardangelenkes eine torsionsteife sowie spielfreie Drehmomentübertragung zwischen den beiden Tragelementen des Radträgers.

Im Unterscheid zum Metallbalg kann das Kardangelenk gänzlich ohne elastische Rückstellkräfte und damit insgesamt leichtgängiger als der Metallbalg eine Auslenkung des radseitigen Drehteils um einen vorgegebenen Schwenkwinkel gegenüber dem achsseitigen Drehteil ausgleichen.

Bevorzugt sind die oben genannten radseitigen und achsseitigen Stege unter Bildung von Freiräumen zueinander winkelversetzt angeordnet. In diese Freiräume kann bauraumgünstig jeweils zumindest teilweise ein Stellantrieb angeordnet oder alternativ die außenseitig am Drehteil angeordnete Getriebestufe vorgesehen werden.

Die Mitte des Kardangelenkes liegt gemäß einer Ausführung der Erfindung auf Höhe des Momentanpols des Radträgers, wodurch bei einer Verstellung des Radträgers keine Längenänderung auftritt.

Sowohl der Metallbalg als auch das Kardangelenk kann auftretende Bremsmomente aufnehmen. Dadurch wird die mittels der Drehteile bereitgestellte Aktorik nicht durch Bremsmomente beansprucht.

Durch Auswahl einer geeigneten Getriebestufe beziehungsweise Stirnradstufe können die Stellantriebe auch in Winkel zur Mittenachse des Stellgliedes angestellt werden. Für den Fall, dass die Achsabstände zwischen Stellantrieb und Drehteil zu groß sind, so dass auch die Stirnradverzahnung zu groß werden sollte, kann z. B. auch ein Zahnriementrieb verwendet werden.

Nachfolgend sind vier Ausführungsbeispiele der Erfindung anhand der beigefügten Figuren beschrieben.

Es zeigen:

Fig. 1 in einer schematischen Prinzipdarstellung eine Lenkervorrichtung für ein Fahrzeug gemäß dem ersten Ausführungsbeispiel;

Fig. 2 in einer vergrößerten schematischen Teilschnittansicht einen Radträger in Alleinstellung, in dem ein Stellglied der Lenkvorrichtung integriert ist;

Fig. 3 eine Ansicht des Radträgers, in der Schwenkbewegungen der beiden Drehteile zur Einstellung eines vom Lenkrad vorgegebenen Lenkwinkels oder des Spur- oder Sturzwinkels veranschaulicht sind;

Fig. 4 den Radträger gemäß dem zweiten Ausführungsbeispiel in Alleinstellung;

Fig. 5 den Radträger gemäß dem dritten Ausführungsbeispiel mit einem integrierten Metallbalg; und

Fig. 6      den Radträger gemäß dem vierten Ausführungsbeispiel mit integriertem Kardangelenk.

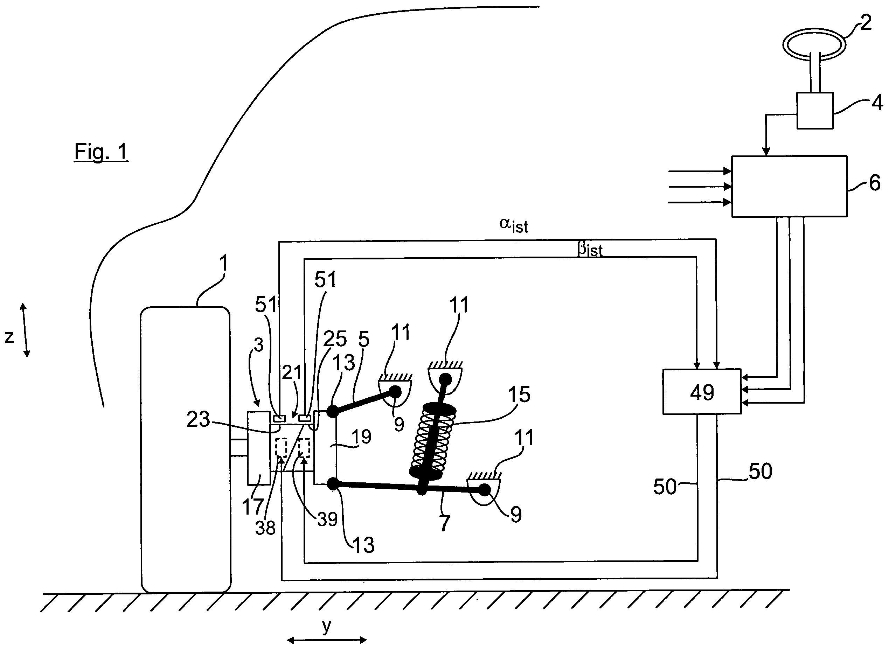

In der Fig. 1 ist eine Lenkvorrichtung für ein Kraftfahrzeug gezeigt. Die Lenkvorrichtung weist ein, vom Fahrzeuginsassen steuerbares Lenkrad 2 mit zugeordnetem Handmomentensteller 4 auf. Der Handmomentensteller erfasst über eine geeignete Sensorik eine Lenkbewegung des Fahrzeuginsassen. Dessen Bewegungssignal wird, wie es aus Steer-by-wire-Systemen bekannt ist, von einem Steuergerät 6 verarbeitet.

Das Steuergerät 6 generiert auf der Grundlage einer erfassten Lenkbewegung ein Steuersignal, das zu einer später beschriebenen Regelungseinrichtung 49 der Lenkvorrichtung geleitet wird. Mittels der Regelungseinrichtung 49 kann ein, der Lenkvorrichtung zugeordnetes Stellglied 21 angesteuert werden, das das in der Fig. 1 gezeigte, lenkbare Fahrzeugrad 1 um einen Lenkwinkel schwenkt, dessen Größe von der Drehbewegung des Lenkrades 2 bestimmt ist.

Wie aus der Fig. 1 weiter hervorgeht, ist das Stellglied 21 in einer Radaufhängung des Kraftfahrzeuges integriert.
Die Radaufhängung ist in der Fig. 1 in Verbindung mit einer bekannten Querlenkerachse dargestellt, bei welcher ein das Fahrzeugrad 1 tragender Radträger 3 unter anderem mit Hilfe eines oberen Querlenkers 5 und eines unteren Querlenkers 7 über aufbauseitige Lenkerlager 9 schwenkbar am Fahrzeugaufbau 11 angebunden sind. Die aufbauseitigen Lenkerlager 9 sowie die radträgerseitigen Lenkerlager 13 sind von üblichem Aufbau. Zwischen dem unteren Querlenker 7 und dem Fahrzeugaufbau 11 ist außerdem in üblicher Weise eine Tragfeder 15 mit zugeordnetem Federbein abgestützt.

Abweichend von der gezeigten Querlenkerachse kann der Radträger 3 mit jeder beliebigen Achse kombiniert werden, etwa einer Starrachse, einer Verbundlenkerachse, einer Mehrlenkerachse, etc.

Gemäß der Fig. 1 weist der Radträger 3 ein radseitiges Tragelement 17 sowie ein achsseitiges Tragelement 19 auf. Am radseitigen Tragelement 17 ist das Fahrzeugrad 1 über eine Radnabe in einem nicht dargestellten Radlager des radseitigen Tragelements 17 gelagert. Außerdem kann am radseitigen Tragelement 17 die Bremsanlage in üblicher Weise angebracht sein. Am achsseitigen Tragelement 19 sind die beiden Querlenker 5, 7 über die Lenkerlager 13 angebunden.

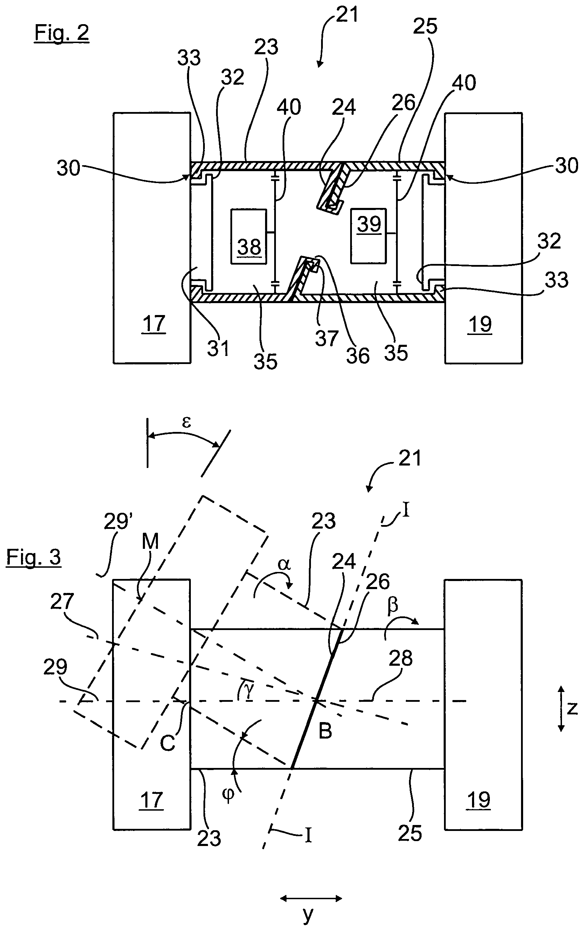

Zwischen den beiden Tragelementen 17, 19 ist das bereits erwähnte Stellglied 21 der Lenkvorrichtung vorgesehen, das ein radseitiges Drehteil 23 und ein achsseitiges Drehteil 25 aufweist. Wie aus der **Fig. 2 oder 3** hervorgeht, sind die beiden Drehteile 23 und 25 über schräggestellte Steuerflächen 24, 26 miteinander in Anlage. Die beiden Steuerflächen 24, 26 liegen somit in einer, in der Fig. 3 angedeuteten Drehebene I, in der sie in Gleitkontakt aufeinander verschiebbar sind. Anstelle des gezeigten Gleitkontakts ist ebenso eine Wälzlagerung zwischen den Drehteilen möglich.

Die Drehteile 23, 25 sind jeweils um ihre Drehachsen 27, 28 drehbar zwischen den beiden Tragelementen 17, 19 gelagert. Die Drehachse 28 des Drehteils 25 ist in Fahrzeugquerrichtung y axial ausgerichtet sowie koaxial zur Mittelachse 29 des Drehteils 23. Die Drehachse 27 des Drehteils 23 ist um einen Neigungswinkel $\gamma$ nach oben geneigt. Bei einer Drehung um einen Drehwinkel $\alpha$ bewegt sich daher das Drehteil 23 mit seiner Mittelachse 29 in einer Taumelbewegung II mit veränderlichem Schwenkwinkel $\varphi$ um die Drehachse 27. Alternativ ist auch eine windschiefe Ausrichtung beider Drehachsen 27, 28 möglich.

In der Fig. 3 ist das Drehteil 23 in seiner Ausgangslage bei einem Drehwinkel $\alpha$=0 gezeigt, in der die Mittelachse 29 des Drehteils 23 koaxial zur Drehachse 28 des Drehteils 25 ausgerichtet ist. In diesem Fall liegt der Sturzwinkel $\varepsilon$ in der dargestellten yz-Ebene des Fahrzeugrads 1 bei 0.

Außerdem ist in der **Fig. 3** in gestrichelten Linien das Drehteil 23 beispielhaft in einer Drehlage bei einem Drehwinkel $\alpha$=180° gezeigt. In dieser Drehlage ist das Drehteil 23 mit seiner Mittelachse 29' in der Taumelbewegung II um die Drehachse 27 nach oben bewegt. Dadurch ergibt sich ein Schwenkwinkel $\varphi$ zwischen den beiden Drehteilen 23 und 25. Der Schwenkwinkel $\varphi$ hat bei dem gezeigten Drehwinkel $\alpha$ von 180° seinen Maximalwert. Entsprechend ist auch das Fahrzeugrad 1 beziehungsweise das radseitige Tragelement 17 um den Sturzwinkel $\varepsilon$ in der yz-Ebene geschwenkt.

Gleichzeitig mit der Drehung des Drehteils 23 oder zeitlich versetzt dazu kann das Drehteil 25 um einen Drehwinkel $\beta$ gegenüber dem achsseitigen Tragelement 19 gedreht werden.

Dadurch wird das in der Fig. 3 gezeigte, gegenüber dem achsseitigen Drehteil 25 abgewinkelte Drehteil 23 aus der yz-Ebene heraus geschwenkt, wodurch der Spurwinkel $\delta$ des Fahrzeugrads 1 einstellbar ist. Bei einer beispielhaften Drehung des abgewinkelten Drehteils 23 um einen Drehwinkel $\beta$ von 90° in der xy-Ebene würde somit der Spurwinkel $\delta$ dem Schwenkwinkel $\varphi$ entsprechen, und der Sturzwinkel $\varepsilon$ auf 0 reduziert sein.

Durch eine kombinierte Verdrehung der Drehteile 23, 25 um die Drehwinkel $\alpha$, $\beta$ kann somit eine kombinierte Sturz- und Spurverstellung realisiert werden. Dabei ist jede beliebige Kombination aus Spurwinkel $\delta$ und Sturzwinkel $\varepsilon$ darstellbar, solange ein maximaler Schwenkwinkel $\varphi_{max}$=2$\gamma$ nicht überschritten wird, und die Gleichung

$$\sin^2 \delta + \sin^2 \varepsilon \leq \sin^2 \varphi_{max}$$

eingehalten ist.

Der zwischen den beiden Drehachsen 27 und 28 eingeschlossene Neigungswinkel $\gamma$ ist in den Figuren zum leichteren Verständnis übertrieben groß dargestellt. Tatsächlich bewegt sich der Neigungswinkel in einer Größenordnung von 2° bis 5°. In Abhängigkeit von der jeweiligen Anwendung kann der Neigungswinkel auch außerhalb dieses Winkelbereiches liegen. Anwendungsbedingt sind auch Neigungswinkel in einer Größenordnung von 45° denkbar.

Bei beliebigen Kombinationen von Spurwinkel δ und Sturzwinkel ε bewegt sich der in der **Fig. 3** an der freien Stirnseite des radseitigen Drehteils 23 dargestellte Mittelpunkt M in einem Kugeloberflächen-Ausschnitt.

In der **Fig. 2** ist grob schematisch und lediglich beispielhaft die Lagerung sowie der Stellantrieb der beiden Drehteile 23, 25 zwischen den Tragelementen 17, 19 des Radträgers 3 gezeigt. So sind die Drehteile 23, 25 über Drehlager 30 mit den Tragelementen 17, 19 in Verbindung. Die Drehlager 30 weisen jeweils einen vom Tragelement 17, 19 ragenden Achsvorsprung 31 auf, der in das hohlzylindrisch gebildete Drehteil 23, 25 einragt. Jeder Achsvorsprung 31 hintergreift dabei mit einem in Radialrichtung ausgeweiteten Flansch 32 einen stirnseitigen Ringbund 33 des jeweiligen Drehteils 23, 25. Die beiden Drehteile 23, 25 sind dabei mit ihrem Ringbund 33 drehbar zwischen dem Flansch 32 und dem jeweiligen Tragelement 17, 19 angeordnet. An den zueinander in Anlage befindlichen Steuerflächen 25, 26 sind einander gegenüberliegende Montageöffnungen vorgesehen. Diese verbinden die beiden zylindrischen Innenräume 35 der Drehteile 23, 25 miteinander.

Wie oben erwähnt, sind die beiden Steuerflächen 24, 26 zueinander in Gleitkontakt und beim Verdrehen der beiden Drehteile aneinander verschiebbar. Zur Kopplung der beiden Drehteile 23, 25 ist gemäß der Fig. 2 die Steuerfläche 24 des radseitigen Drehteils 23 mit einem im Querschnitt hakenförmigen, umlaufenden Flansch 36 ausgebildet. Der Flansch 36 ragt durch die Montageöffnung der gegenüberliegenden Steuerfläche 26 des achsseitigen Drehteils 25 und hintergreift mit einem Schenkel 37 die Steuerfläche 26 das Drehteil 25.

In den Hohlräumen 35 der beiden Drehteile 23, 25 sind Drehmotoren 38, 39 angeordnet, die über einen Getriebezug 40 mit einer Innenverzahnung des jeweiligen Drehteils 23, 25 kämmen.

Zur Einstellung des Lenkwinkels des Fahrzeugrades 1 oder zur aktiven Spur- und Sturzverstellung werden gemäß der **Fig. 1** von dem übergeordneten Steuergerät 6 auf der Grundlage unterschiedlicher Fahrzeugparameter und/oder Lenkungsparameter die Soll-Werte für den Lenkwinkel und/oder die Spur- und Sturzwinkel berechnet und zu der Regelungs- beziehungsweise Steuereinrichtung 49 geleitet. Die Regelungseinrichtung 49 ist über Signalleitungen 50 mit den Drehmotoren 38, 39 der beiden Drehteile 23, 25 ansteuerbar, die die jeweiligen Drehteile 23, 25 über einen Drehwinkel $\alpha$ oder einen Drehwinkel $\beta$ drehen. Wie in der **Fig. 1** angedeutet, sind beiden Drehteilen 23, 25 Winkelgeber 51 zugeordnet, die jeweils einen Ist-Wert $\alpha_{ist}$ und $\beta_{ist}$ der beiden Drehteile 23, 25 erfassen und zur die Regelungseinrichtung 49 rückführen.

Die Drehwinkel $\alpha$ und $\beta$ für die Drehmotoren 38, 39 der beiden Drehteile 23, 25 werden mittels eines Bewegungsalgorithmus in der Regelungseinrichtung 49 berechnet.

In Abweichung zu den gezeigten Drehmotoren 38, 39 kann die Verdrehung der Drehteile 23 und 25 durch jede Aktorik erfolgen, welche eine Drehbewegung erzeugt. Dabei ist die Ausgangsposition der beiden Zylinder zueinander beliebig wählbar und nur abhängig von der aktuellen Spur- und Sturzwertvorgabe.

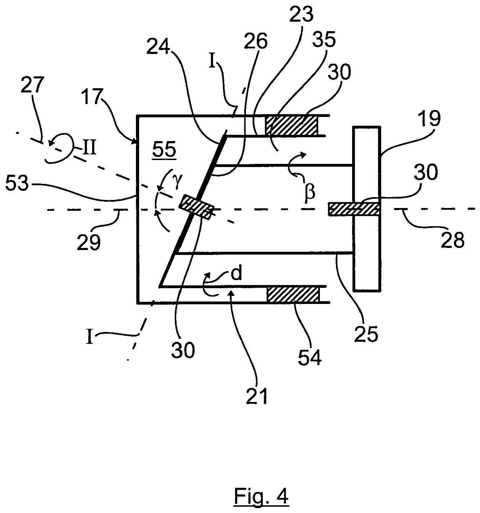

In der **Fig. 4** ist der Radträger 3 gemäß dem zweiten Ausführungsbeispiel schematisch gezeigt. Die Funktionsweise entspricht der des Radträgers 3 der **Fig. 1 bis 3,** so dass auf dessen Beschreibung verwiesen wird. Für einander entsprechende Bauteile werden identische Bezugsziffern verwendet.

Im Unterscheid zum ersten Ausführungsbeispiel sind die beiden Drehteile 23, 25 nicht axial hintereinander angeordnet, sondern sind die beiden Drehteile 23, 25 bauraumgünstig ineinander verschachtelt angeordnet. Das achsseitige Drehteil 25 ist hier im zylindrischen Hohlraum 35 des radseitigen Drehteils 23 angeordnet.

Wie im ersten Ausführungsbeispiel sind in der **Fig. 4** die beiden Drehteile 23, 25 über ihre schräggestellten Steuerflächen 24, 26 miteinander in Anlage, die wiederum in der Drehebene I liegen. Das radseitige Tragelement 17 ist hier nicht als Platte, sondern topfförmig mit einem radseitigen Tragelement-Boden 53 und einer hier beispielhaft zylindrischen Umfangswand 54 ausgebildet.

Das aus den beiden Drehteilen 23, 25 bestehende Stellglied 21 ist nahezu vollständig innerhalb des vom topfförmigen Tragelement 17 begrenzten Montageraums 55 angeordnet. Das Drehteil 23 ist dabei über das Drehlager 30 drehbar an der Umfangswand 54 des Tragelements 17 abgestützt. Aus dem Montageraum 55 des topfförmigen Tragelements 17 ragt lediglich das achsseitige Ende des Drehteils 25, das am achsseitigen Tragelement 19 drehgelagert ist.

Analog zum ersten Ausführungsbeispiel kann sich das Drehteil 23 mit seiner Mittelachse 29 in der Taumelbewegung II mit veränderlichem Schwenkwinkel $\varphi$ um die Drehachse 27 drehen. Außerdem kann sich das Drehteil 25 um den Drehwinkel $\beta$ gegenüber dem achsseitigen Tragelement 19 drehen.

Die beiden ersten Ausführungsbeispiele der **Fig. 1 bis 4** sind auf die grundsätzliche Funktionsweise sowie den Regelalgorithmus ausgerichtet, auf dessen Grundlage die rad- und achsseitigen Drehteile 23, 25 zwischen dem radseitigen Tragelement 17 und dem achsseitigen Tragelement 19 zueinander verdrehbar sind.

Wie aus den **Fig. 1 bis 4** der ersten beiden Ausführungsbeispiele weiter hervorgeht, sind die beiden Tragelemente 17 und 19 nicht drehfest zueinander angeordnet, sondern sind bei bestimmten Betriebs- beziehungsweise Fahrzuständen die im folgenden nochmals beschriebenen Drehfreiheitsgrad zwischen den beiden Tragelementen 17 19 von Bedeutung: So kann gemäß der **Fig. 2** einerseits der Drehmotor 38 über den Getriebezug 40 des Drehteil 23 sowohl gegenüber dem Drehteil 25 als auch gegenüber dem radseitigen Tragelement 19 drehen. Andererseits kann der Drehmotor 39 über den Getriebezug 40 das Drehteil 25 sowohl gegenüber dem Drehteil 23 als auch gegenüber dem achsseitigen Tragelement 19 drehen. Der Drehmotor 38 kann dabei mit dem radseitigen Tragelement 17 fest verbunden sein, während der Drehmotor 39 mit dem achsseitigen Tragelement 19 fest verbunden sein kann. Selbst bei blockierten Drehmotoren 38, 39 sind daher die beiden Drehteile 23, 25 über ihre Steuerflächen 24, 26 nicht drehfest verbunden.

Im ungünstigen Fall bestehen bei den in den **Fig. 1 bis 4** gezeigten Anordnung somit die Gefahr, dass Momente vom radseitigen Tragelement 17 nicht auf das achsseitige Tragelement 19 übertragen werden, weil selbst bei blockierten Drehmotoren 38, 39 über die Steuerflächen 24, 26 der Drehteile 23, 25 durch den dazwischen vorhandenen Drehfreiheitsgrad keine Drehmomentübertragung möglich ist. Solche zu übertragende Drehmomente sind beispielsweise Bremsmomente oder Reaktionsmomente aus der Radaufstandskraft mit Hebelarm, der gewissermaßen aus den schräggestellten Wirkflächen resultiert.

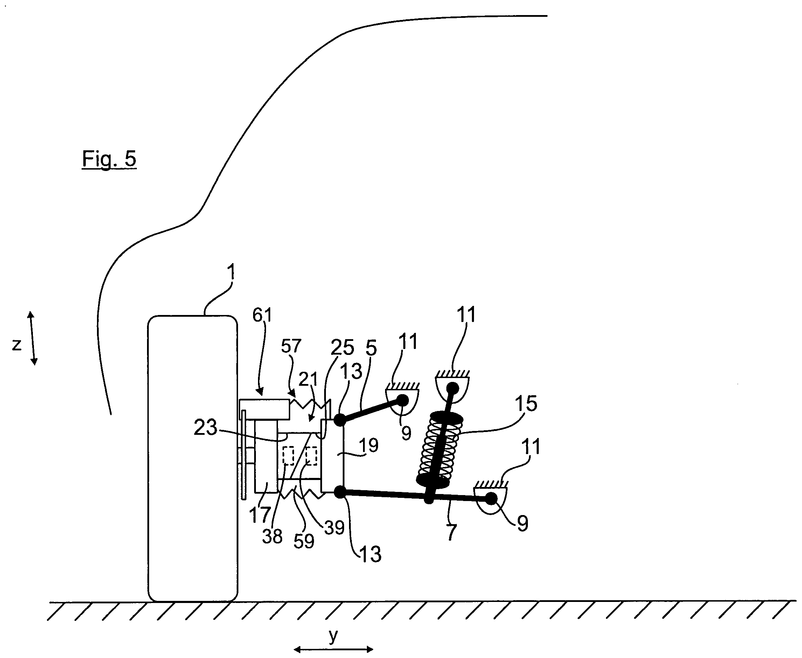

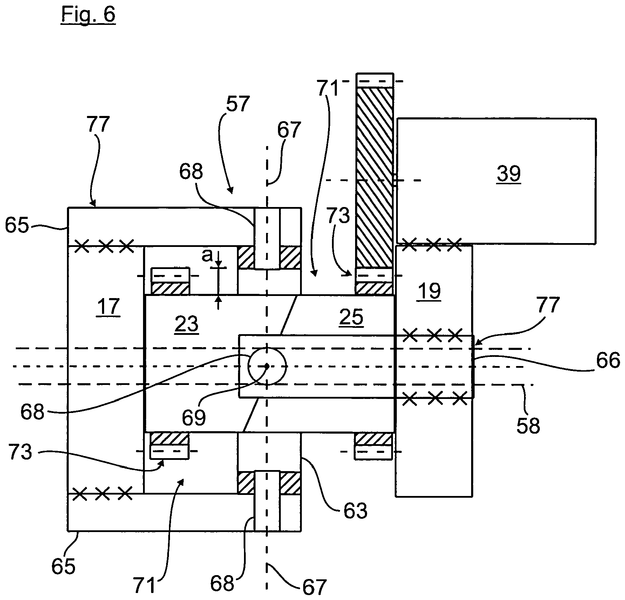

In den folgenden dritten und vierten Ausführungsbeispielen der **Fig. 5 und 6** sind daher für eine Drehmomentübertragung vom radseitigen Tragelement 17 auf das achsseitige Tragelement 19 jeweils Kupplungselemente 57 zwischengeschaltet, die einerseits in deren Axialrichtung biegeweich und torsionssteif ausgeführt sind.

Das in der **Fig. 5** gezeigte dritte Ausführungsbeispiel ist grundsätzlich funktions- und baugleich mit dem ersten Ausführungsbeispiel. Insofern wird auf dessen Beschreibung verwiesen. Im Unterschied zu den vorangegangenen Ausführungsbeispielen wird im Ausführungsbeispiel der **Fig. 5** als Kupplungselement 57 ein Metallbalg eingesetzt. Metallbälge weisen bekanntermaßen eine hohe Verdrehsteifigkeit auf, so dass eine exakte Übertragung von Winkel- oder Drehmomenten gewährleistet ist, und zwar unabhängig von einem über die Drehteile 23, 25 führenden Übertragungsweg.

Der in der Fig. 5 gezeigte Metallbalg 57 ist an seinen Enden über nicht gezeigte Befestigungsschrauben jeweils fest am radseitigen Tragelement 17 und am achsseitigen Tragelement 19 montiert. Durch seinen ziehharmonikaartig geformten Zylindermantel ist der Metallbalg 57 in seiner Axialrichtung elastisch nachgiebig, so dass Winkel-Verlagerungen der beiden Drehteile 23, 25 über den Schwenkwinkel φ bei geringen Rückstellkräften ausgeglichen werden können.

Der Metallbalg 57 ist über einen freien Radialabstand von den Drehteilen 23, 25 beabstandet und begrenzt gemäß der **Fig. 5** einen Montageraum 59, in dem die beiden Drehteile 23, 25, gegebenenfalls hermetisch nach außen abgedichtet, angeordnet sind.

Bei einem Bremsvorgang wird die in der **Fig. 5** angedeutete, am radseitigen Tragelement 17 angebrachte Bremsanlage 61 aktiviert. Das dadurch erzeugte Bremsmoment wird hier nicht über die beiden Drehteile 23, 25 zum Fahrzeugaufbau geleitet, sondern über den Metallbalg 57, der eine spielfreie sowie torsionssteife Drehmomentübertragung des Bremsmomentes auf den Fahrzeugaufbau ermöglicht.

In der **Fig. 6** ist das vierte Ausführungsbeispiel gezeigt, das vom grundsätzlichen Aufbau mit den vorangegangenen Ausführungsbeispielen übereinstimmt. Insofern wird auf deren Beschreibung Bezug genommen. Im Unterschied zu den vorangegangen Ausführungsbeispielen wird das radseitige Tragelement 17 gehalterte Fahrzeugrad 1 (in der **Fig. 6** nicht gezeigt) nicht geschleppt, das heißt nicht durch eine Gelenkwelle angetrieben, sondern ist zusätzlich eine in der **Fig. 6** gestrichelt angedeutete Gelenkwelle 58 vorgesehen.

Die Gelenkwelle 58 ist durch die Hohlräume 35 der beiden Drehteile 23, 25 geführt und treibt das Fahrzeugrad 1 an, wie es bei einem Hinterrad- oder Allradantrieb der Fall ist. Aus Platzgründen sind daher die beiden Stellantriebe 38, 39 (in der **Fig. 6** ist lediglich der Stellantrieb 39 gezeigt) nicht mehr innerhalb der Hohlräume 35 angeordnet, sondern außerhalb des Hohlraumes 35 der beiden Drehteile 23, 25 angeordnet. Die beiden Stellantriebe 38, 39 sind gemäß der Fig. 7 dabei über außenumfangsseitig an den Drehteilen 23, 25 vorgesehenen Stirnradstufen 73 in Zahnverbindung.

Im Unterschied zum dritten Ausführungsbeispiel der **Fig. 5** ist das Kupplungselement 57 zur Übertragung eines Bremsmomentes vom radseitigen Tragelement 17 zum achsseitigen Tragelement 19 kein Metallbalg, sondern ein Kardangelenk. Das Kardangelenk 57 weist gemäß der **Fig. 6** als ein zentrales Gelenkteil einen im Halbschnitt gezeigten Kardanring 63 auf, der sich radial außerhalb um die Drehteile 23, 25 erstreckt und über einen Radialabstand a von den Drehteilen 23, 25 beabstandet ist. Der Kardanring 63 ist jeweils über eine Kardangelenkgabel 77 mit dem radseitigen Tragelement 17 und mit dem achsseitigen Tragelement 19 in Verbindung.

Die beiden Gelenkgabeln 77 weisen jeweils radseitige und achsseitige Stege 65, 66 auf. Die Stege 65, 66 sind einerseits in Festverbindung mit den Tragelementen 17, 19 und andererseits mittels Lagerzapfen 68, die die zueinander rechtwinkligen Drehachsen 67, 69 definieren, am Kardanring 63 angelenkt. Die radseitigen und achsseitigen Stege 65, 66 sind gemäß der **Fig. 6** zueinander um einen Winkel von 90° winkelversetzt, und zwar unter Bildung von Freiräumen 71. In diesen Freiräumen 71 kann bevorzugt zumindest teilweise die Getriebestufe 73 und/oder der jeweilige Drehmotor 38, 39 einragen.

**Patentansprüche**

1. Lenkvorrichtung für ein Fahrzeug, mit zumindest einem Stellglied (21), das zumindest ein lenkbares Fahrzeugrad (1) um einen Lenkwinkel schwenkt, der über ein, vom Fahrzeuginsassen steuerbares Lenkrad (2) als Lenkwinkelgeber vorgebbar ist, wobei das Stellglied (21) ein radseitiges Drehteil (23) und ein achsseitiges Drehteil (25) aufweist, die um ihre Drehachsen (27, 28) zueinander verdrehbar sind, und wobei zur Erstellung des Lenkwinkels des Fahrzeugrades (1) das radseitige Drehteil (23) beim Verdrehen der beiden Drehteile (23, 25) um den Schwenkwinkel ($\varphi$) gegenüber dem achsseitigen Drehteil (25) auslenkbar ist, wobei das Stellglied (21) in einem Radträger (3) einer Radaufhängung des Fahrzeuges integriert ist, **dadurch gekennzeichnet, dass** der Radträger (3) ein radseitiges, ein Fahrzeugrad (1) drehbar lagerndes Tragelement (17) und ein achsseitiges Tragelement (19) aufweist, zwischen denen ein Stellglied (21) geschaltet ist, und die beiden Drehteile (23, 25) über Drehlager (30) und/oder Wälzlager an den jeweiligen Tragelementen (17, 19) drehbar gelagert sind, und dass jedem der beiden Drehteile (23, 25) als Stellantrieb jeweils ein Drehmotor (38, 39) zugeordnet ist, der innerhalb und/oder außerhalb des jeweiligen Drehteils (23, 25) angeordnet ist, dass zwischen dem radseitigen Tragelement (17) und dem achsseitigen Tragelement (19) ein Kupplungselement (57) geschaltet ist, mittels dessen ein Drehmoment, etwa ein Bremsmoment, vom radseitigen Tragelement (17) auf das achsseitige Tragelement (19) übertragbar ist, und dass die Ansteuerung der Drehmotoren (38, 39) über das Lenkrad (2) mit einem Steer-by-wire-System erfolgt, bei dem eine Lenkbewegung des Fahrzeuginsassen über eine Sensorik von einem, dem Lenkrad (2) zugeordneten Handmomentsteller (4) erfasst wird, dessen Bewegungssignal in einem Steuergerät (6) verarbeitet wird, und dass das Steuergerät (6) auf der Grundlage der erfassten Lenkbewegung ein Steuersignal generiert, das zu einer Regeleinrichtung (49) geleitet wird, die über Signalleitungen (50) mit den Drehmotoren (38, 39) der beiden Drehteile (23, 25) verbunden ist, wodurch auf der Grundlage des über den Lenkwinkelgeber vorgegebenen Lenkwinkels das Stellglied (21) ansteuerbar ist.

2. Lenkvorrichtung nach Anspruch 1, **dadurch gekennzeichnet, dass** die Drehachse (27) des radseitigen Drehteils (23) um einen Neigungswinkel ($\gamma$) gegenüber der Drehachse (28) des achsseitigen Drehteils (25) schräggestellt ist.

3. Lenkvorrichtung nach Anspruch 1 oder 2, **dadurch gekennzeichnet, dass** das Drehteil (23) mit seiner Mittelachse (29, 29') in einer Taumelbewegung mit veränderlichem Schwenkwinkel ($\varphi$) um die Drehachse (27) drehbar ist.

4. Lenkvorrichtung nach einem der vorhergehenden Ansprüche, **dadurch gekennzeichnet, dass** die beiden Drehteile (23, 25) über Steuerflächen (24, 26) in Gleitkontakt und/oder Wälzkontakt sind, die in einer Drehebene (I) liegen, die senkrecht zur Drehachse (27) des radseitigen Drehteils (23) liegt.

5. Lenkvorrichtung nach einem der vorhergehenden Ansprüche, **dadurch gekennzeichnet, dass** durch Drehung des radseitigen Drehteils (23) der Schwenkwinkel ($\varphi$) eingestellt ist, und durch Drehung des achsseitigen Drehteils (25) gegenüber dem achsseitigen Tragelement (19) die räumliche Ausrichtung der aus beiden Drehteilen (23, 25) bestehenden Winkelanordnung festlegbar ist.

6. Lenkvorrichtung nach einem der vorhergehenden Ansprüche, **dadurch gekennzeichnet, dass** die beiden Drehteile (23, 25) mit Hohlräumen (35) ausgebildet sind.

7. Lenkvorrichtung nach einem der vorhergehenden Ansprüche, **dadurch gekennzeichnet, dass** die Regeleinrichtung (49) zusätzlich auf der Grundlage eines Soll-Spur-/Sturzwinkels ($\varepsilon_{soll}$, $\delta_{soll}$) das Stellglied (21) ansteuert und die Drehwinkel ($\alpha$, $\beta$) festlegt, über die die Drehteile (23, 25) mittels des Stellantriebes (38, 39) zu verstellen sind.

8. Lenkvorrichtung nach einem der vorhergehenden Ansprüche, **dadurch gekennzeichnet, dass** den Drehteilen (23, 25) Winkelgeber (51) zugeordnet sind, die einen Drehwinkel-Ist-Wert ($\alpha_{ist}$, $\beta_{ist}$) der Drehteile (23, 25) erfassen und an die Steuereinrichtung (49) rückführen.

9. Lenkvorrichtung nach einem der vorhergehenden Ansprüche, **dadurch gekennzeichnet, dass** die beiden Drehteile (23, 25) in Axialrichtung ineinander verschachtelt angeordnet sind, wobei das achsseitige Drehteil (25) in einem Hohlraum (35) des radseitigen Drehteils (23) angeordnet ist.

10. Lenkvorrichtung nach einem der vorhergehenden Ansprüche, **dadurch gekennzeichnet, dass** zumindest eines der beiden Tragelemente (17, 19) als ein Hohlprofilteil einen Montageraum (55) begrenzt, in dem zumindest teilweise die beiden Drehteile (23, 25) angeordnet sind.

11. Lenkvorrichtung nach einem der vorhergehenden Ansprüche, **dadurch gekennzeichnet, dass** das Kupplungselement (57) funktionell von den Drehteilen (23, 25) entkoppelt ist, und/oder über einen freien Abstand (a) vom Stellglied (21) beabstandet ist.

12. Lenkvorrichtung nach einem der vorhergehenden Ansprüche, **dadurch gekennzeichnet, dass** das Kupplungselement (57) verdrehsteif bzw. torsionssteif ist, und die Auslenkung des radseitigen Drehteils (23) um den Schwenkwinkel (φ) gegenüber dem achsseitigen Drehteil (25) zulässt.

## Claims

1. Steering device for a vehicle having at least one actuating element (21) which pivots at least one steerable vehicle wheel (1) about a steering angle, which can be pre-determined via a steering wheel (2) as steering angle determiner controllable by a vehicle occupant, wherein the actuating element (21) has a wheel-side rotary member (23) and an axle-side rotary member (25) which are rotatable to one another around their rotation axes (27, 28), and wherein for establishing the steering angle of the vehicle wheel (1) the wheel-side rotary member (23) when rotating the two rotary members (23, 25) is moveable about the pivoting angle (φ) with respect to the axle-side rotary member (25), wherein the actuating element (21) is integrated in a hub carrier (3) of a wheel suspension of the vehicle, **characterised in that** the hub carrier (3) has one wheel-side supporting element (17) rotatably supporting a vehicle wheel (1) and one axle-side supporting element (19), between which one actuating element (21) is inserted, and the two rotary members (23, 25) are rotatably supported via pivot bearings (30) and/or rolling bearings at the respective support elements (17, 19), and that to each of the two rotary members (23, 25) is assigned as actuating drive respectively one rotation motor (38, 39), which is disposed within and/or outside the respective rotary member (23, 25), that between the wheel-side supporting element (17) and the axle-side supporting element (19) is inserted a coupling element (57) by means of which a torque, for example a brake torque, can be transmitted from the wheel-side supporting element (17) onto the axle-side supporting element (19), and that the controlling of the rotation motors (38, 39) is effected via the steering wheel (2) with a steer-by-wire-system, in which a steering movement of the vehicle occupant is detected via a sensor system by a manual torque actuator (4) assigned to the steering wheel (2), the movement signal of which is processed in a control device (6), and that the control device (6) on the basis of the detected steering movement generates a control signal which is routed to a regulating device (49), which is connected via signal lines (50) with the rotation motors (38, 39) of the two rotary members (23, 25), as a result of which on the basis of the steering angle pre-determined via the steering angle determiner the actuating element (21) can be controlled.

2. Steering device according to claim 1, **characterised in that** the rotation axis (27) of the wheel-side rotary member (23) is inclined at an inclination angle (γ) with respect to the rotation axis (28) of the axle-side rotary member (25).

3. Steering device according to claim 1 or 2, **characterised in that** the rotary member (23) is rotatable with its central axis (29, 29') in a tumbling motion with changeable pivoting angle (φ) about the rotation axis (27).

4. Steering device according to any of the preceding claims, **characterised in that** the two rotary members (23, 25) are via control surfaces (24, 26) in sliding contact and/or in rolling contact, which lie in a rotation plane (I) which lies perpendicular to the rotation axis (27) of the wheel-side rotary member (23).

5. Steering device according to any of the preceding claims, **characterised in that** through rotation of the wheel-side rotary member (23) the pivoting angle (φ) is set and through rotation of the axle-side rotary member (25) with respect to the axle-side supporting element (19) the spatial alignment of the angular arrangement comprising the two rotary members (23, 25) can be defined.

6. Steering device according to any of the preceding claims, **characterised in that** the two rotary members (23, 25) are formed with cavities (35).

7. Steering device according to any of the preceding claims, **characterised in that** the regulating device (49) in addition on the basis of a target toe/camber angle ($\varepsilon_{soll}$, $\delta_{soll}$) controls the actuating element (21) and defines the angle of rotation ($\alpha$, $\beta$) by which the rotary members (23, 25) are to be displaced by means of the actuating drive (38, 39).

8. Steering device according to any of the preceding claims, **characterised in that** angle sensors (51) are assigned to the rotary members (23, 25), which detect an angle of rotation actual value ($\alpha_{ist}$, $\beta_{ist}$) of the rotary members (23, 25) and feed it back to the control device (49).

9. Steering device according to any of the preceding claims, **characterised in that** the two rotary members (23, 25) are disposed in axial direction nested within one another, wherein the axle-side rotary member (25) is disposed in a cavity (35) of the wheel-side rotary member (23).

10. Steering device according to any of the preceding claims, **characterised in that** at least one of the two supporting elements (17, 19) as a hollow profile part delimits an assembly space (55) in which the two rotary members (23, 25) are at least partially disposed.

11. Steering device according to any of the preceding claims, **characterised in that** the coupling element (57) is functionally decoupled from the rotary members (23, 25), and/or distanced via a free spacing (a) from the actuating element (21).

12. Steering device according to any of the preceding claims, **characterised in that** the coupling element (57) is rotationally or torsionally rigid and allows the displacement of the wheel-side rotary member (23) around the pivoting angle ($\varphi$) with respect to the axle-side rotary member (25).


**Revendications**

1. Dispositif de direction pour un véhicule, avec au moins un organe de réglage (21) qui fait pivoter au moins une roue de véhicule orientable (1) d'un angle de direction qui peut être prescrit par l'intermédiaire d'un volant (2) commandable par l'occupant de véhicule et faisant office de capteur d'angle de direction,

dans lequel l'organe de réglage (21) comporte une partie tournante (23) côté roue et une partie tournante (25) côté essieu qui peuvent être tournées l'une par rapport à l'autre autour de leurs axes de rotation (27, 28)

et dans lequel, pour établir l'angle de direction de la roue de véhicule (1), la partie tournante (23) côté roue peut lors de la rotation des deux parties tournantes (23, 25) être déviée de l'angle de pivotement ($\varphi$) par rapport à la partie tournante (25) côté essieu, l'organe de réglage (21) étant intégré dans un support de roue (3) d'une suspension de roue du véhicule,

**caractérisé en ce que** le support de roue (3) comporte un élément porteur (17) côté roue qui réalise un support rotatif d'une roue de véhicule (1) et un élément porteur (19) côté essieu, éléments porteurs entre lesquels est placé un organe de réglage (21), et **en ce que** les deux parties tournantes (23, 25) sont logées de manière à pouvoir tourner sur les éléments porteurs (17, 19) respectifs par l'intermédiaire de coussinets (30) et/ou roulements, et **en ce qu'**il est associé comme mécanisme de réglage à chacune des deux parties tournantes (23, 25) à chaque fois un moteur couple (38, 39) qui est agencé à l'intérieur et/ou à l'extérieur de la partie tournante (23, 25) respective, **en ce qu'**un élément de couplage (57) est placé entre l'élément porteur (17) côté roue et l'élément porteur (19) côté essieu, élément de couplage au moyen duquel un couple, par exemple un couple de freinage, peut être transmis par l'élément porteur côté roue (17) à l'élément porteur côté essieu (19), et **en ce que** la commande des moteurs couples (38, 39) s'effectue par l'intermédiaire du volant (2) avec un système électrique Steer-by-wire tel qu'un mouvement de direction de l'occupant de véhicule est détecté par l'intermédiaire d'un système capteur par un transmetteur de couple manuel (4) qui est associé au volant (2) et dont le signal de mouvement est traité dans un appareil de commande (6), et **en ce que** l'appareil de commande (6) génère sur la base du mouvement de direction détecté un signal de commande qui est conduit à un dispositif de régulation (49) qui est relié par l'intermédiaire de lignes de signal (50) avec les moteurs couples (38, 39) des deux parties tournantes (23, 25), l'organe de réglage (21) pouvant ainsi être commandé sur la base de l'angle de direction prescrit par l'intermédiaire du capteur d'angle de direction.

2. Dispositif de direction selon la revendication 1, **caractérisé en ce que** l'axe de rotation (27) de la partie tournante (23) côté roue est placé incliné d'un angle d'inclinaison ($\gamma$) par rapport à l'axe de rotation (28) de la partie tournante (25) côté essieu.

3. Dispositif de direction selon la revendication 1 ou 2, **caractérisé en ce que** la partie tournante (23) avec son axe médian (29, 29') peut tourner dans un mouvement d'oscillation avec angle de pivotement variable ($\varphi$) autour de l'axe de rotation (27).

4. Dispositif de direction selon l'une quelconque des revendications précédentes, **caractérisé en ce que** les deux parties tournantes (23, 25) sont en contact glissant et/ou en contact roulant par l'intermédiaire de surfaces de commande (24, 26) qui se trouvent dans un plan de rotation (I) qui est perpendiculaire à l'axe de rotation (27) de la partie tournante (23) côté roue.

5. Dispositif de direction selon l'une quelconque des revendications précédentes, **caractérisé en ce que** l'angle de pivotement ($\varphi$) est réglé par une rotation de la partie tournante (23) côté roue et l'orientation spatiale de la disposition angulaire composée des deux parties tournantes (23, 25) peut être fixée par rapport à l'élément porteur (19) côté essieu par une rotation de la partie tournante (25) côté essieu.

6. Dispositif de direction selon l'une quelconque des revendications précédentes, **caractérisé en ce que** les deux parties tournantes (23, 25) sont réalisées avec des espaces creux (35).

7. Dispositif de direction selon l'une quelconque des revendications précédentes, **caractérisé en ce que** le dispositif de régulation (49) commande en plus l'organe de réglage (21) sur la base d'un angle de pincement/carrossage de consigne ($\varepsilon_{soll}, \delta_{soll}$) et fixe les angles de rotation ($\alpha, \beta$) selon lesquels les parties tournantes (23, 25) sont à déplacer au moyen du moteur de réglage (38, 39).

8. Dispositif de direction selon l'une quelconque des revendications précédentes, **caractérisé en ce que** des capteurs angulaires (51) sont associés aux parties tournantes (23, 25), lesquels capteurs angulaires détectent une valeur réelle d'angle de rotation ($\alpha_{ist}$, $\beta_{ist}$) des parties tournantes (23, 25) et les renvoient au dispositif de commande (49).

9. Dispositif de direction selon l'une quelconque des revendications précédentes, **caractérisé en ce que** les deux parties tournantes (23, 25) sont agencées imbriquées l'une dans l'autre dans la direction axiale, la partie tournante (25) côté essieu étant agencée dans un espace creux (35) de la partie tournante (23) côté roue.

10. Dispositif de direction selon l'une quelconque des revendications précédentes, **caractérisé en ce qu'**au moins un des deux éléments porteurs (17, 19) délimite en tant que partie de profilé creux un espace de montage (55) dans lequel sont agencées au moins en partie les deux parties tournantes (23, 25).

11. Dispositif de direction selon l'une quelconque des revendications précédentes, **caractérisé en ce que** l'élément de couplage (57) est découplé fonctionnellement des parties tournantes (23, 25) et/ou est distant de l'organe de réglage (21) d'une distance libre (a).

12. Dispositif de direction selon l'une quelconque des revendications précédentes, **caractérisé en ce que** l'élément de couplage (57) est rigide en torsion et autorise la déviation de la partie tournante (23) côté roue de l'angle de pivotement ($\varphi$) par rapport à la partie tournante (25) côté essieu.

Fig. 1

Fig. 2

Fig. 3

Fig. 4

EP 2 342 117 B1

Fig. 5

z

1

61

57

25 5

21 13 11

23

11

15

19

11

17

38 59 39

9

13

7

9

y

Fig. 6

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9816418 A
- DE 102004049296 A1
- WO 9209476 A
- JP 60015224 A
- WO 9006255 A
- DE 102008011367 A1